# EUROPÄISCHE PATENTSCHRIFT

(11) **EP 1 081 605 B1**
(45) Veröffentlichungstag und Bekanntmachung des Hinweises auf die Patenterteilung: **31.10.2007**
(21) Anmeldenummer: 00116356.7
(22) Anmeldetag: 28.07.2000
(51) Int. Cl.: G06F 17/30

(54) **Netzwerk von Rechnereinheiten**
Computer-Network
Réseau informatique

(30) Priorität: 28.08.1999 DE 19940990
(43) Veröffentlichungstag der Anmeldung: 07.03.2001
(73) Patentinhaber: Mindlab GmbH, 73728 Esslingen (DE)
(72) Erfinder: Häfele, Uli, 70199 Stuttgart (DE); Köhler, Susanne, 73265 Dettingen (DE); Krieger, Michael, 73265 Dettingen/Teck (DE); Ebert, Bernd, 73230 Kirchheim/Teck (DE)
(74) Vertreter: Ruckh, Rainer Gerhard

(56) Entgegenhaltungen:
- WO-A-97/40446
- US-A- 5 727 129
- US-A- 5 933 827

## Beschreibung

Die Erfindung betrifft ein Netzwerk gemäß dem Oberbegriff des Anspruchs 1.

Ein derartiges Netzwerk stellt beispielsweise das Internet dar. Das Internet bildet ein weltweites Rechnernetzwerk, zu welchem Benutzer über ihre Kunden-Rechnereinheiten Zugang erhalten. Der Zugang zum Internet erfolgt durch Herstellung einer Verbindung einer Kunden-Rechnereinheit zu einer Netzwerkknoten-Rechnereinheit, wobei hierzu der Benutzer gegebenenfalls eine benutzerspezifische Kennung in die Kunden-Rechnereinheit eingibt.

Nach Herstellung der Verbindung zum Internet kann der Benutzer Informationen aus Datenbanken abfangen, wobei die Datenbanken auf Datenbank-Rechnereinheiten in unterschiedlichen Staaten installiert sein können.

Dabei kann der Benutzer während derartiger Abfragen auch Gebrauch von benutzerspezifischen Bestandsdaten machen. Bei diesen Bestandsdaten handelt es sich um persönliche und typischerweise vertrauliche Daten.

Beispielsweise kann ein Benutzer über das Internet Gebrauch von seinen persönlichen Bankdaten, wie Kontostände, laufende Kredite, eingeräumte Kreditrahmen und dergleichen machen.

Nachdem sich der Benutzer einen Überblick über seine persönlichen Daten verschafft hat kann er beispielsweise über das Internet nach geeigneten Geldanlagen oder dergleichen recherchieren.

Problematisch hierbei ist jedoch, aus der großen Informationsvielfalt geeignete Informationsquellen herauszufinden, um zu brauchbaren Rechercheergebnissen zu gelangen.

Zwar existieren im Internet bereits zu verschiedenen Themenkomplexen Suchmaschinen, die eine Recherche erleichtern sollen, jedoch sind diese oftmals schwierig zu bedienen und liefern oftmals nicht die gewünschten Rechercheergebnisse.

Um diese Schwierigkeiten zu beseitigen wäre es möglich, über zentrale Rechnereinheiten einen Benutzer bei seiner Recherche im Internet fortlaufend zu verfolgen.

Beispielsweise wäre es möglich, den Benutzer anhand seiner benutzerspezifischen Kennung zu erfassen und zu verfolgen, welche Informationen der Benutzer über das Internet abruft. In Abhängigkeit davon könnten dem Benutzer Nachrichten übermittelt werden, die für ihn hilfreich sein können.

Eine derartige Vorgehensweise ist jedoch aus Datenschutzgründen unzulässig. Sobald der Benutzer den Zugang zum Internet herstellt, würden ohne sein Wissen und ohne seine Zustimmung dessen Abfragen erfasst und dessen benutzerspezifische Kennung mit seinen persönlichen Bestandsdaten verknüpft und zu Datenverarbeitungszwecken verwendet werden.

Aus der US 5,933,827 ist ein Computersystem bekannt, mit welchem Web-Seiten identifiziert werden können, die für einen Benutzer von Interesse sein können. Der Client-Rechner wird über Server an das Internet angeschlossen. Der Client-Rechner und damit der Benutzer wird von dem oder den Servern unter einer vorgegebenen Adresse identifiziert. Abhängig von den Eingabebefehlen des Benutzers werden diesem über den jeweiligen Server Subkategorien ausgegeben, die Informationen von Interesse für den Benutzer enthalten. Aus diesen Subkategorien kann der Benutzer Auswahlen treffen.

Die WO 98/03016 betrifft ein Rechnersystem zur Durchführung einer undirektionalen Datenübertragung. In den einzelnen angeschlossenen Stationen werden die dorthin übertragenen Daten für eine spätere Nutzung gespeichert. Die Kriterien zur Abspeicherung können benutzerspezifisch vorgegeben werden.

Die WO 96/34349 betrifft ein berührungslos arbeitendes Datenübertragungssystem, an welche mehrere Benutzereinheiten anschließbar sind. In einem Service-Provider können benutzerspezifische Daten gespeichert werden. Unter Nutzung dieser Daten können für den jeweiligen Benutzer einer Benutzereinheit interessante Informationen übermittelt werden.

Die WO 98/07103 betrifft ein System zum Empfang mehrerer Rundfunk-Kanäle. Das System weist eine Suchmaschine und eine Speichereinheit auf. Weiterhin sind mehrere Benutzer-Terminals an das System anschließbar. Über die Benutzer-Terminals kann ein Benutzer Such-Profile in die Speichereinheit eingeben. Anhand der Benutzerprofile werden mit der Suchmaschine die vom Benutzer gewünschten Rundfunk-Kanäle gesucht.

Die US 5,515,098 betrifft ein System zur Verteilung von Werbemitteilungen in Rundfunksystemen. Die Verteilung der Mitteilungen erfolgt an Adressen, die unter demographischen Gesichtspunkten ermittelt und in einem Server gespeichert werden.

Die EP 0 749 081 A1 betrifft ein Verteilersystem für Informationen und Werbung. Das System weist einen Datenserver auf, auf dem die zu verteilenden Informationen gespeichert sind. Dabei sind die Informationen in Kategorien geordnet.

An den Datenserver können Workstations angeschlossen werden, an welche die Informationen ausgebbar sind. In den Workstations können spezifische Profile abgespeichert sein, die als Filter dienen, damit nur eine gewünschte Untermenge der vom Datenserver verteilten Daten empfangen wird.

Die EP 0 718 784 A1 betrifft ein System zum Recherchieren von Daten anhand eines benutzerspezifischen Profils. Das benutzerspezifische Profil wird in einem Client-Rechner des Benutzers generiert und an einen Server übertragen. Dort wird die Recherche anhand des benutzerspezifischen Profils durchgeführt. Das Ergebnis der Recherche wird an den Client-Rechner übertragen.

Aus BOYAN J, "The Anonymizer - Protecting User Privacy on the Web", 1997, Internet citation, XP002231197, ist ein anonymer Zugang für einen User in das Internet bekannt. Der User stellt dabei keine direkte Verbindung zum Internet dar, sondern wählt eine anonyme Website an, von der ein anonymer Zugang zum Internet ermöglicht wird.

Aus Gabber E et al., "How to make personalized Web browsing simple, secure and anonymous", Financial Cryptography First International Conference, FC '97. Proceedings, 1997, Springer-Verlag, Berlin, Germany, ISBN 3-540-63594-7, pp. 17-31, ist eine weitere anonyme Zugangsmöglichkeit in das Internet bekannt. Dort werden einem User über einen Janus Anonymizer anonyme Passwörter zugewiesen.

Der Erfindung liegt die Aufgabe zugrunde, bei einem Netzwerk der eingangs genannten Art ohne Verletzung von Datenschutzbestimmungen einem Benutzer des Netzwerks in Abhängigkeit der von ihm durchgeführten Anfragen geeignete Nachrichten zuzusenden.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Erfindungsgemäß ist der Netzwerkknoten-Rechnereinheit, über welche ein Benutzer Zugang zum Netzwerk erlangt, eine Schnittstelleneinheit zugeordnet, welche eine Befehlsanalyseeinheit sowie eine Aktivierungseinheit steuert.

Über die Befehlsanalyseeinheit ist die Folge der vom Benutzer über die Kunden-Rechnereinheit abgefragten Informationen erfassbar. Über die Schnittstelleneinheit ist die Kunden-Rechnereinheit oder die über diese eingegebene benutzerspezifische Kennung durch Zuordnung einer transienten Nummer von Folge der abgefragtten Informationen separierbar.

Mittels wenigstens einer Klassifikationseinheit wird die Folge der abgefragten Informationen wenigstens einer Klasse aus einer vorgegebenen Anzahl von Klassen zugeordnet.

In Abhängigkeit der Zuordnung zu der Klasse ist mittels der Aktivierungseinheit über die Netzwerkknoten-Rechnereinheit an die Kunden-Rechnereinheit wenigstens eine Nachricht ausgebbar.

Der Grundgedanke besteht somit darin, das Abfrageverhalten eines Benutzers des Netzwerks losgelöst von der benutzerspezifischen Kennung in der Schnittstelleneinheit sowie in den angeschlossenen Einheiten, nämlich der Befehlsanalyseeinheit, der Aktivierungseinheit und der Klassifikationseinheit zu verfolgen, auszuwerten und in Abhängigkeit davon Nachrichten an die Kunden-Rechnereinheit abzusetzen.

Diese Aktivitäten erfolgen unter einer transienten Nummer, die der Kunden-Rechnereinheit oder der benutzerspezifischen Kennung zugewiesen ist. Im einfachsten Fall wird in der Schnittstelleneinheit diese transiente Nummer der Kunden-Rechnereinheit ohne die benutzerspezifische Kennung zugewiesen. Dies ist dann der Fall, wenn der Zugang zum Netzwerk ohne Eingabe einer benutzerspezifischen Kennung erfolgt. In diesem Fall erfolgen die Aktivitäten in den an die Schnittstelleneinheit angeschlossenen Einheiten ohne jeden Bezug auf den Benutzer und daher völlig anonym.

In einer weiteren Ausgestaltung der Erfindung sind die benutzerspezifische Kennung und die dieser zugeordnete transiente Nummer zwar in der Schnittstelleneinheit gemeinsam abgespeichert, werden jedoch niemals gemeinsam an die angeschlossenen Einheiten gemeinsam weitergegeben. Vielmehr erfolgt über die Schnittstelleneinheit an die angeschlossenen Einheiten allein die Weitergabe der transienten Nummer.

In wenigstens einer Klassifikationseinheit wird die Folge der vom Benutzer abgefragten Informationen einer Klasse zugeordnet. Durch die Klassifizierung der Folge der abgefragten Informationen werden diese anonymisiert und können insbesondere nicht mehr dem jeweiligen Benutzer zugeordnet werden. Vorteilhafterweise bestehen die Klassifikationseinheiten aus neuronalen Netzen oder dergleichen.

Die Handhabung derartiger anonymer Daten unter Bezugnahme auf eine ebenfalls anonyme transiente Nummer ist datenschutzrechtlich unbedenklich.

Damit können diese Daten dahingehend ausgewertet werden, dass je nach Zuordnung zu einer bestimmten Klasse bestimmte Nachrichten über die Aktivierungseinheit generiert und über die Netzwerkknoten-Rechnereinheit an die Kunden-Rechnereinheit ausgegeben werden.

Der Benutzer erhält dann als Antwort auf seine von ihm getätigten Abfragen im Netzwerk eine geeignete Nachricht, ohne dass seine persönlichen Daten datenschutzrechtlich missbräuchlich genutzt worden sind.

Die Nachrichten können dabei vorteilhaft aus Angeboten oder Entscheidungshilfen für die weitere Abfrage im Netzwerk bestehen.

Die Erfindung wird im nachstehenden anhand der Zeichnungen erläutert. Es zeigen:

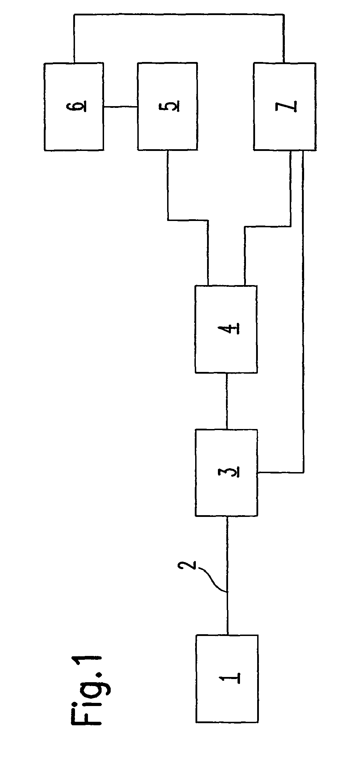

- Figur 1:: Blockschaltbild eines Ausschnitts eines Ausführungsbeispiels des erfindungsgemäßen Netzwerks.

Figur 1 zeigt einen Ausschnitt eines Ausführungsbeispiels aus einem Netzwerk, wobei in diesem Ausführungsbeispiel das Netzwerk vom Internet gebildet ist.

Das Netzwerk umfasst eine Vielzahl von Kunden-Rechnereinheiten 1, wobei diese Kunden-Rechnereinheiten 1 von Personalcomputern, Workstations und dergleichen gebildet sind.

Die Kunden-Rechnereinheiten 1, von welchen in Figur 1 lediglich eine dargestellt ist, sind über Datenleitungen 2 an das Netzwerk angeschlossen. Der Zugang zu Datenbanken, die auf nicht dargestellten zentralen Rechnereinheiten oder auch dezentral auf Personalcomputern weiterer Netzwerk-Nutzer installiert sein können, erfolgt dabei über Netzwerkknoten-Rechnereinheiten 3. Dabei ist eine vorgegebene Anzahl von Kunden-Rechnereinheiten 1 an eine Netzwerkknoten-Rechnereinheit 3 angeschlossen. Auf der Netzwerkknoten-Rechnereinheit 3 ist eine Software zum Anschluß der Kunden-Rechnereinheit 1 installiert. Für den Fall, dass das Netzwerk vom Internet gebildet ist, ist diese Software als Internet-Server ausgebildet.

In diesem Ausführungsbeispiel erfolgt der Zugang zum Netzwerk durch Eingabebefehle in die Kunden-Rechnereinheit ohne Eingabe einer benutzerspezifischen Kennung. Darauf erhält ein Benutzer über einen Internet-Server Zugang zum Internet und kann daraufhin aus Datenbanken von ihm gewünschte Informationen abrufen. Je nach Art der gewünschten Informationen wird dabei vom Benutzer ein bestimmter Internet-Server aufgerufen, wobei über diesen die gewünschten Daten abgefragt werden.

Bei dem in Figur 1 dargestellten Ausführungsbeispiel ist einer Netzwerkknoten-Rechnereinheit 3 eine Schnittstelleneinheit 4 zugeordnet, welche eine Befehlsanalyseeinheit 5, eine dieser zugeordnete Klassifikationseinheit 6 und eine Aktivierungseinheit 7 steuert.

Diese Einheiten sind zweckmäßigerweise von Software-Modulen gebildet, die auf der Netzwerkknoten-Rechnereinheit 3 selbst oder auf einer dieser zugeordneten Rechnereinheit installiert sind.

In der Schnittstelleneinheit 4 wird den über eine angeschlossene Kunden-Rechnereinheit 1 durchgeführten Abfragen eine transiente Nummer zugewiesen. Diese transiente Nummer bildet eine anonyme Kennung. Unter dieser transienten Nummer wird in der Befehlsanalyseeinheit 5 die Folge der vom Benutzer der Kunden-Rechnereinheit 1 durchgeführten abgefragten Informationen erfaßt und abgespeichert.

In der der Befehlsanalyseeinheit 5 zugeordneten Klassifikationseinheit 6 wird die Folge der abgefragten Informationen einer Klasse aus einer vorgegebenen Anzahl von Klassen zugeordnet. Die Klassifikationseinheit 6 kann dabei von einem neuronalen Netz, einem Entscheidungsbaum oder dergleichen gebildet sein.

Die Klassifizierung erfolgt dabei zweckmäßigerweise in mehreren Stufen derart, dass analysiert wird, in welchen Bereichen, wie zum Beispiel Geldanlageformen, Wirtschaftsinformationen oder Konsumartikel der Benutzer recherchiert. Dann wird weiterhin klassifiziert, welche Arten der Geldanlagen recherchiert werden oder ob Börsendaten oder dergleichen abgefragt werden.

Die Klassifikation kann dabei in mehreren Schritten lediglich verfeinert werden. In jedem Fall erfolgt die Zuordnung der individuellen Folge von Abfragen zu einer anonymen Klasse, die strukturell das Abfrageverhalten eines Benutzertyps beschreibt, jedoch keinerlei Rückschlüsse auf den einzelnen Benutzer oder dessen persönliche Daten zuläßt.

Die so ausgewählte Klasse kann somit ohne Verletzung von Datenschutzbestimmungen zur weiteren Datenverarbeitung genutzt werden. Insbesondere wird, wie aus Figur 1 ersichtlich, über die Klassifikationseinheit 6 die Aktivierungseinheit 7 angesteuert. Dabei wird je nach ausgewählter Klasse in der Aktivierungseinheit 7 eine bestimmte Nachricht oder eine Folge von Nachrichten generiert, welche über die Netzwerkknoten-Rechnereinheit 3 an die Kunden-Rechnereinheit 1 ausgegeben und dem Benutzer angezeigt wird. Dabei erfolgt die Auswahl der Klasse sowie die Generierung der Nachricht jeweils für die jeweilige transiente Nummer, so dass von der Aktivierungseinheit 7 die Nachricht zusammen mit der transienten Nummer an die Netzwerkknoten-Rechnereinheit 3 weitergegeben wird.

Über die auf der Netzwerkknoten-Rechnereinheit 3 installierte Software, insbesondere über den Internet-Server, wird die Nachricht dem jeweiligen Benutzer zugeordnet, so dass dann die Nachricht auf die Kunden-Rechnereinheit 1 des Benutzers ausgebbar ist.

Die Nachricht kann dergestalt sein, dass dem Benutzer in Abhängigkeit der bisher durchgeführten Abfragen geeignete Angebote oder Werbenachrichten übermittelt werden. Zudem können dem Benutzer Informationen über weitergehende Abfragemöglichkeiten übermittelt werden, wodurch die Orientierung im Internet erheblich vereinfacht wird.

### Bezugszeichenliste

- (1): Kunden-Rechnereinheit
- (2): Datenleitung
- (3): Netzwerkknoten-Rechnereinheit
- (4): Schnittstelleneinheit
- (5): Befehlsanalyseeinheit
- (6): Klassifikationseinheit
- (7): Aktivierungseinheit

## Patentansprüche

1. Netzwerk mit mehreren Kunden-Rechnereinheiten, mehreren Netzwerkknoten-Rechnereinheiten sowie mehreren Datenbank-Rechnereinheiten, wobei zur Herstellung der Verbindung einer Kunden-Rechnereinheit über eine Netzwerkknoten-Rechnereinheit zu einer Datenbank einer Datenbank-Rechnereinheit in eine Kunden-Rechnereinheit ein Eingabebefehl eingebbar ist, worauf Informationen über die Kunden-Rechnereinheit aus den Datenbanken abfragbar sind, **dadurch gekennzeichnet, dass** der Netzwerkknoten-Rechnereinheit (3) eine Schnittstelleneinheit (4) zugeordnet ist, die eine Befehlsanalyseeinheit (5) sowie eine Aktivierungseinheit (7) steuert, wobei über die Befehlsanalyseeinheit (5) die Folge der abgefragten Informationen erfassbar ist und wobei über die Schnittstelleneinheit (4) die Kunden-Rechnereinheit durch Zuordnung einer eine anonyme Kennung bildenden transienten Nummer von der Folge der abgefragten Informationen separierbar ist und in der Befehlsanalyseeinheit (5) unter der transienten Nummer die Folge der abgefragten Informationen erfasst und abgespeichert wird, dass mittels wenigstens einer Klassifikationseinheit (6), die als Softwaremodul auf einer der Netzwerkknoten - Rechnereinheit zugeordneten Rechnereinheit installiert ist, die Folge der abgefragten Informationen wenigstens einer Klasse aus einer vorgegebenen Anzahl von Klassen zugeordnet sind, und dass in Abhängigkeit der Zuordnung zu der Klasse mittels der Aktivierungseinheit (7) über die Netzwerkknoten-Rechnereinheit (3) an die Kunden-Rechnereinheit (1) als Antwort auf die getätigten Abfragen wenigstens eine Nachricht ausgebbar ist, wobei je nach ausgewählter Klasse in der Aktivierungseinheit (7) eine bestimmte Nachricht oder eine Folge von Nachrichten generiert wird, welche über die Netzwerkknoten-Rechnereinheit (3) an die Kunden-Rechnereinheit (1) ausgegeben wird, und dem Benutzer angezeigt wird, wobei die Auswahl der Klasse sowie die Generierung der Nachricht jeweils für die jeweilige transiente Nummer erfolgt, und wobei über die auf der Netzwerkknoten-Rechnereinheit (3) installierte Software die Nachricht dem jeweiligen Benutzer zugeordnet wird, so dass dann die Nachricht auf die Kunden-Rechnereinheit (1) des Benutzers ausgebbar ist.

2. Netzwerk nach Anspruch 1, **dadurch gekennzeichnet, dass** dieses vom Internet gebildet ist.

3. Netzwerk nach Anspruch 2, **dadurch gekennzeichnet, dass** die Netzwerkknoten-Rechnereinheit (3) eine Rechnereinheit mit einem Internet-Server umfasst.

4. Netzwerk nach Anspruch 3, **dadurch gekennzeichnet, dass** die Schnittstelleneinheit (4) und die Befehlsanalyseeinheit (5) von Software-Modulen gebildet sind, die auf der Rechnereinheit der Netzwerkknoten-Rechnereinheit (3) oder einer dieser zugeordneten Rechnereinheit installiert sind.

5. Netzwerk nach Anspruch 4, **dadurch gekennzeichnet, dass** die Klassifikationseinheit (6) von neuronalen Netzen oder Entscheidungsbäumen gebildet sind.

## Claims

1. Network with several client computer units, several network node computer units as well as several databank computer units, wherein for producing the connection of a client computer unit by way of a network node computer unit with a databank of a databank computer unit an input command can be input into a client computer unit whereupon data about the client computer unit can be interrogated from the databanks, **characterised in that** the network node computer unit (3) is associated with an interface unit (4) controlling a command analysing unit (5) as well as an activation unit (7), wherein the sequence of interrogated data is detectable by way of the computer analysing unit (5) and wherein the client computer unit is separable by way the interface unit (4) by association of a transient number, which forms an anonymous identification, from the sequence of interrogated data and the sequence of interrogated data is detected and stored in the command analysing unit (5) under the transient number, that at least one class from a predetermined number of classes is associated with the sequence of interrogated data by means of at least one classification unit installed as a software module on a computer unit associated with the network node computer unit, and that depending on the association with the class at least one communication can be issued by means of the activation unit (7) via the network node computer unit (3) to the client computer unit (1) as response to the actuated interrogation, wherein depending on the respectively selected class a specific communication or a sequence of communications is generated in the activation unit (7) and is issued via the network node computer unit (3) to the client computer unit (1) and displayed to the user, wherein the selection of the class as well as the generation of the communication is carried out in each instance for the respective transient number and wherein the communication to the respective user is associated by way of the software, which is installed on the network node computer unit (3), so that then the communication can be issued to the client computer unit (1) of the user.

2. Network according to claim 1, **characterised in that** this is formed by the Internet.

3. Network according to claim 2, **characterised in that** the network node computer unit (3) comprises a computer unit with an Internet server.

4. Network according to claim 3, **characterised in that** the interface unit (4) and the command analysing unit (5) are formed by software modules which are installed on the computer unit of the network node computer unit (3) or a computer unit associated therewith.

5. Network according to claim 4, **characterised in that** the classification unit (6) is formed by neuronal networks or decision trees.

## Revendications

1. Réseau comprenant plusieurs ordinateurs clients, plusieurs ordinateurs de noeud de réseau ainsi que plusieurs ordinateurs de base de données, sur lequel une instruction d'entrée peut être entrée dans un ordinateur client pour établir la liaison d'un ordinateur client avec une base de données d'un ordinateur de base de données via un ordinateur de noeud de réseau, suite à quoi des informations peuvent être consultées dans les bases de données via l'ordinateur client, **caractérisé en ce que** l'ordinateur de noeud de réseau (3) est associé à une unité d'interface (4) qui commande une unité d'analyse d'instructions (5) et une unité d'activation (7), la suite d'informations consultées pouvant être saisie par l'unité d'analyse d'instructions (5) et l'ordinateur client pouvant être séparé de la suite d'informations consultées par l'unité d'interface (4) par affectation d'un numéro transitoire formant une identification anonyme et la suite d'informations consultées étant saisie et mémorisée sous le numéro transitoire dans l'unité d'analyse d'instructions (5), qu'au moyen d'au moins une unité de classification (6), qui est installée sous forme de module logiciel sur un ordinateur associé à l'ordinateur de noeud de réseau, la suite d'informations consultées est associée à au moins une classe parmi un nombre prédéfini de classes, et qu'en fonction de l'association à la classe au moins un message peut être délivré à l'ordinateur client (1) au moyen de l'unité d'activation (7) via l'ordinateur de noeud de réseau (3) en réponse aux consultations effectuées, un message défini ou une suite de messages étant généré(e) dans l'unité d'activation (7) selon la classe sélectionnée, lequel ou laquelle est délivré(e) via l'ordinateur de noeud de réseau (3) à l'ordinateur client (1) et affiché(e) à l'utilisateur, la sélection de la classe ainsi que la génération du message étant effectuées pour le numéro transitoire respectif et le message étant associé à l'utilisateur respectif par le logiciel installé sur l'ordinateur de noeud de réseau (3) de façon que le message puisse ensuite être délivré sur l'ordinateur client (1) de l'utilisateur.

2. Réseau selon la revendication 1, **caractérisé en ce qu'**il est formé par l'internet.

3. Réseau selon la revendication 2, **caractérisé en ce que** l'ordinateur de noeud de réseau (3) comprend un ordinateur avec un serveur internet.

4. Réseau selon la revendication 3, **caractérisé en ce que** l'unité d'interface (4) et l'unité d'analyse d'instructions (5) sont formées par des modules logiciels qui sont installés sur l'ordinateur de l'ordinateur de noeud de réseau (3) ou sur un ordinateur associé à celui-ci.

5. Réseau selon la revendication 4, **caractérisé en ce que** l'unité de classification (6) est formée de réseaux neuronaux et d'arbres de décision.
